# EUROPÄISCHE PATENTANMELDUNG

(11) **EP 3 305 475 A1**
(43) Veröffentlichungstag der Anmeldung: **11.04.2018**
(21) Anmeldenummer: 17194822.7
(22) Anmeldetag: 04.10.2017
(51) Int. Cl.: B25J 9/00, B25J 17/02

(54) **GELENKEINHEIT**

(30) Priorität: 06.10.2016 DE 102016119009
(71) Anmelder: Weiss GmbH, 74722 Buchen (Odw.) (DE)
(72) Erfinder: Hedrich, René, 86152 Augsburg (DE); Frank, Tobias, 74740 Adelsheim (DE)
(74) Vertreter: Manitz Finsterwald Patentanwälte PartmbB

(57) **Zusammenfassung**

Die vorliegende Erfindung betrifft eine Gelenkeinheit zur gelenkigen Verbindung von zumindest einem ersten und einem zweiten Bauelement. Die Gelenkeinheit umfasst eine mit dem ersten Bauelement verbindbaren Gelenkkörper, insbesondere hülsenartigen Gelenkkörper. In dem Gelenkkörper ist ein um eine erste Drehachse drehbar gelagertes erstes Gelenkelement angeordnet. Das erste Gelenkelement weist zumindest einen Lagerabschnitt auf, der ein um eine zweite Drehachse drehbar gelagertes zweites Gelenkelement aufnimmt, das mit dem zweiten Bauelement verbindbar ist.

## Beschreibung

Die vorliegende Erfindung betrifft eine Gelenkeinheit zur gelenkigen Verbindung von zumindest einem ersten und einem zweiten Bauelement.

Derartige Gelenkeinheiten werden in einer Vielzahl von Maschinen eingesetzt, um zwei miteinander verbundene Bauelemente relativ zueinander verschwenken und/oder drehen zu können. Beispielsweise besteht in der Robotik ein großer Bedarf nach kostengünstigen und kompakten Gelenkeinheiten, die zur zuverlässigen Verbindung von einzelnen Teilen eines Roboterarms dienen.

Erfindungsgemäß weist eine derartige Gelenkeinheit die Merkmale des Anspruchs 1 auf.

Die erfindungsgemäße Gelenkeinheit weist einen mit einem ersten Bauelement verbindbaren Gelenkkörper auf, der insbesondere hülsenartig ausgebildet. In dem Gelenkkörper ist ein um eine Drehachse drehbar gelagertes erstes Gelenkelement angeordnet. Das genannte Gelenkelement weist zumindest einen Lagerabschnitt auf, der ein um eine zweite Drehachse drehbar gelagertes zweites Gelenkelement aufnimmt, das mit einem zweiten Bauelement verbindbar ist.

Mit anderen Worten ermöglicht die erfindungsgemäße Gelenkeinheit eine um zwei Drehachsen verschwenkbare Verbindung von zwei Bauelementen. Mit vergleichsweise wenig Bauteilen wird somit eine flexibel einsetzbare Gelenkeinheit geschaffen. Aufgrund der geringen Anzahl von erforderlichen Bauteilen baut die Gelenkeinheit sehr kompakt und ist überdies kostengünstig herstellbar.

Weitere Ausführungsformen der Erfindung sind in der Beschreibung, den Figuren und den Ansprüchen angegeben.

Gemäß einer vorteilhaften Ausführungsform sind die erste und die zweite Drehachse im Wesentlichen senkrecht zueinander angeordnet. Für besondere Anwendungen können die beiden Drehachsen aber auch schräg zueinander verlaufen. Insbesondere schneiden sich die durch die Drehachsen definierten Geraden. Es ist jedoch auch durchaus denkbar, dass bei Bedarf ein seitlicher Versatz zwischen den durch die beiden Drehachsen definierten Geraden vorgesehen ist, so dass sich diese Geraden nicht schneiden.

Um die Befestigung des zweiten Bauelements zu vereinfachen, kann der Lagerabschnitt seitlich aus dem Gelenkkörper ragen.

Eine besonders einfache und robuste Bauform wird erreicht, wenn das erste Gelenkelement direkt in dem Gelenkkörper gelagert ist. Zwar ist grundsätzlich auch eine Gleitlagerung möglich, bevorzugt wird jedoch eine Lagerung mittels Wälzkörper, insbesondere Kugeln. Dies gilt auch für Ausführungsformen, bei denen keine direkten Lagerung des Gelenkelements in den Gelenkkörper vorliegt, sondern bei denen weitere Komponenten zwischen dem Gelenkelement und dem Gelenkkörper angeordnet sind.

Das erste Gelenkelement kann einstückig ausgebildet sein, um die Herstellungskosten und die Robustheit der erfindungsgemäßen Gelenkeinheit zu erhöhen. Dies gilt auch für das zweite Gelenkelement.

Gemäß einer weiteren Ausführungsform ist das zweite Gelenkelement in einem, insbesondere hülsenartigen Körper gelagert. Der Körper kann in einer Aufnahme des Lagerabschnitts angeordnet sein. Diese Aufnahme ist beispielsweise eine leicht herzustellende Bohrung. Grundsätzlich ist es aber auch denkbar, das zweite Gelenkelement direkt in der Aufnahme zu lagern, insbesondere mittels Wälzkörper.

Gemäß einer weiteren Ausführungsform weist das Gelenkelement zwei Lagerabschnitte auf, die an entgegengesetzten Enden des ersten Gelenkelements angeordnet sind. Vorzugsweise ist das erste Gelenkelement symmetrisch zu einer Symmetrieebene ausgestaltet, die sich senkrecht zu der ersten Drehachse erstreckt. Grundsätzlich kann auch der hülsenartige Gelenkkörper eine derartige Symmetrie aufweisen.

Das zweite Gelenkelement kann einen Abschnitt aufweisen, der zur Befestigung des zweiten Bauelements vorgesehen ist. Der Abschnitt kann aus dem Körper ragen und/oder zumindest abschnittsweise mit einem Gewinde, insbesondere mit einem Außengewinde versehen sein. Eine derartige Bauart erleichtert die Befestigung des zweiten Bauelements.

Die Erfindung betrifft ferner eine Manipulationseinrichtung, insbesondere einen Roboter, der einen gelenkigen Manipulationsarm aufweist, d.h. einen Manipulationsarm, der verschiedene Abschnitte aufweist, die miteinander gelenkig verbunden und relativ zueinander verschwenkbar sind. Erfindungsgemäß umfasst die genannte Manipulationseinrichtung zumindest eine Gelenkeinheit gemäß einer der vorstehend beschriebenen Ausführungsformen.

Gemäß einer Ausführungsform der Manipulationseinrichtung weist diese drei gelenkige Manipulationsarme auf. Beispielsweise handelt es sich bei der genannten Manipulationseinrichtung um einen Tripod-Roboter. Jeder Manipulationsarm weist einen ersten Armabschnitt auf, der mit einem Antriebsmotor verbunden ist. Ferner ist ein zweiter Armabschnitt vorgesehen, der mit einer den drei Manipulationsarmen gemeinsamen Basis verbunden ist. Der erste und der zweite Armabschnitt sind jeweils durch eine Gelenkeinheit gemäß zumindest eines der vorstehend beschriebenen Ausführungsformen miteinander verbunden. Darüber hinaus ist der zweite Armabschnitt jeweils durch eine erfindungsgemäße Gelenkeinheit mit der Basis verbunden.

Der zweite Armabschnitt kann zwei im Wesentlichen parallel angeordnete Armelemente umfassen.

Nachfolgend wird die vorliegende Erfindung anhand vorteilhafter Ausführungsformen unter Bezugnahme auf die beigefügten Zeichnungen erläutert. Es zeigen:
- Fig. 1: eine perspektivische Ansicht einer Ausführungsform der erfindungsgemäßen Gelenkeinheit,
- Fig. 2 und 3: eine Seiten- bzw. Stirnansicht der in Fig. 1 gezeigten Gelenkeinheit,
- Fig. 4: einen Schnitt durch die in Fig. 1 bis 3 gezeigten Gelenkeinheit durch die in den Fig. 2 und 3 angedeutete Schnittebene B-B, und
- Fig. 5: eine Ausführungsform einer erfindungsgemäßen Manipulationseinrichtung.

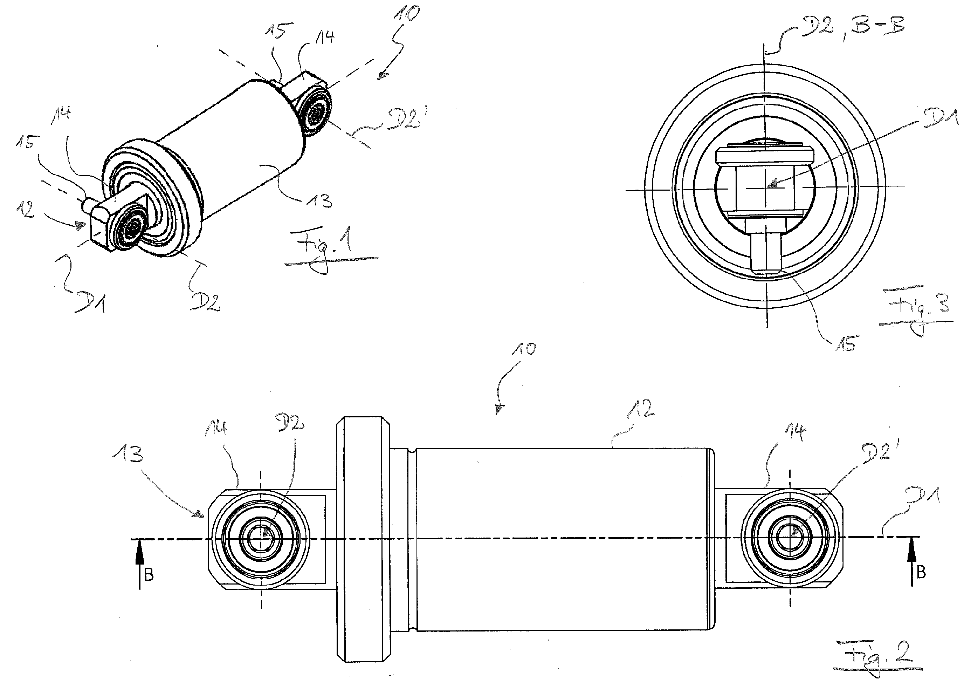

Fig. 1 zeigt eine Gelenkeinheit 10 in einer perspektivischen Ansicht. Die Gelenkeinheit 10 umfasst einen um eine Drehachse D1 verdrehbares Gelenkelement 13, das in einem hülsenartigen Gelenkkörper 12 angeordnet ist. Das Gelenkelement 13 weist an seinen beiden Enden jeweils Lagerabschnitte 14 auf, an denen wiederum jeweils ein um Drehachsen D2 bzw. D2' drehbar gelagertes Gelenkelement 15 gelagert ist. Die parallel zueinander angeordneten Drehachsen D2, D2' schneiden die Drehachse D1 in einem rechten Winkel.

Fig. 2 zeigt die Gelenkeinheit 10 in einer Seitenansicht, so dass die Drehachsen D2, D2' senkrecht zur Bildebene stehen.

Fig. 3 zeigt die Gelenkeinheit 10 in einer Stirnansicht, das heißt in Richtung der Drehachse D1. Die Drehachse D1 erstreckt sich somit senkrecht zu der Bildebene.

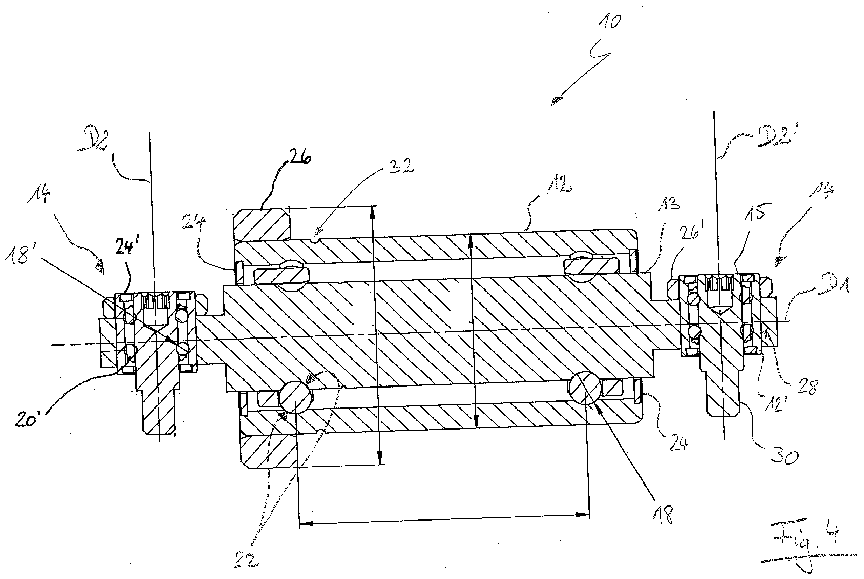

Anhand der Fig. 4 wird im Folgenden der Aufbau der Gelenkeinheit 10 näher erläutert. Sie zeigt eine Schnittansicht in der Schnittebene B-B, deren Lage in den Fig. 2 und 3 eingezeichnet ist.

Wie in Fig. 4 zu erkennen ist, ist das Gelenkelement 13 durch eine Vielzahl von Kugeln 18 direkt in dem Gelenkkörper 12 gelagert. Die Kugeln 18 werden durch Kugelkäfige 20 in ihrer Lage gesichert, so dass zwei Kugelringe gebildet sind, die das Gelenkelement 13 zuverlässig lagern. Die Kugeln 18 befinden sich in Einbaulage dann in an dem Gelenkkörper 12 und dem Gelenkelement 13 vorgesehenen Rillen 22.

Das Gelenkelement 13 ist letztlich eine Art Welle, die direkt in einer Art Lagerhülse (hier der Gelenkkörper 12) gelagert ist. Bei der Montage der Einheit 10 wird wie folgt vorgegangen: Zunächst werden die Kugeln 18 in die Rillen 22 des Gelenkkörpers 12 eingebracht. Sie liegen dabei aneinander an und füllen einen Teil des Umfangs der Rillen 22 aus. Anschließend wird das Gelenkelement 13 eingebracht und die Kugeln 18 in Umfangsrichtung verteilt und durch den entsprechenden Kugelkäfig 20 in ihrer Lage gesichert. Anschließend werden die Stirnseiten des Gelenkkörpers 12 durch Sprengringe 24 verschlossen, um das Innere des Gelenkkörpers 12 vor Verschmutzung zu schützen. Ferner wird von außen ein Fixierring 26 auf dem Gelenkkörper 12 aufgebracht. Er ist so dimensioniert, dass er in radialer Richtung auf den Gelenkkörper 12 wirkende Kräfte ausübt, um dieses vorzuspannen und damit zu sichern.

In den Lagerabschnitten 14 sind Bohrungen 28 vorgesehen. Die Bohrungen 28 nehmen jeweils eine Lageranordnung auf, die ähnlich wie die vorstehend beschriebene Lagerung des Gelenkelements 13 ausgestaltet ist. Es ist jeweils ein Gelenkkörper 12' vorgesehen, in dem mittels Kugeln 18'jeweils ein Gelenkelement 15 gelagert ist. Die Kugeln 18' werden durch Kugelkäfige 20' in ihrer Position gehalten. Die Montage erfolgt wie vorstehend beschrieben. Sprengringe 24' und jeweils ein Fixierungsring 26' sind ebenfalls vorgesehen. Die Sicherung des jeweiligen Gelenkkörpers 12' in der entsprechenden Bohrung 28 kann beispielsweise durch Kleben und/oder durch einen Kraftschluss erfolgen. Auch andere Fixierungsmöglichkeiten wie etwa Verschrauben oder (punktuelles) Verschweißen sind denkbar.

Das Gelenkelement 15 weist an der dem Ring 26' abgewandten Seite einen Gewindeabschnitt 30 auf, an dem ein Bauteil befestigbar ist.

Der Gelenkkörper 12 wiederum ist mit einem weiteren Bauteil verbindbar, beispielsweise mit einem Abschnitt eines Roboterarms. Beispielsweise weist dieser Abschnitt eine Bohrung auf, in die der Gelenkkörper 12 einschiebbar und dort fixierbar ist, beispielsweise mittels Kleben, Schweißen, Verschrauben und/oder mittels eines Presssitzes. Der Ring 26 kann dabei als Anschlag dienen, um eine Einschubtiefe des Gelenkkörpers 12 zu definieren.

In dem konkret gezeigten Beispiel ist die Verwendung eines Klebstoffs zur Fixierung des Gelenkkörpers 12 vorgesehen. Beim Einschieben des Gelenkkörpers 12 in eine entsprechende Aufnahme (in Fig. 4 wäre eine Einschubbewegung eine Bewegung der Einheit 10 nach rechts) wird unter Umständen Klebstoff nach links abgestriffen. Dieser überschüssige Klebstoff wird dabei zumindest teilweise von einer Aufnahmerille 32 aufgenommen.

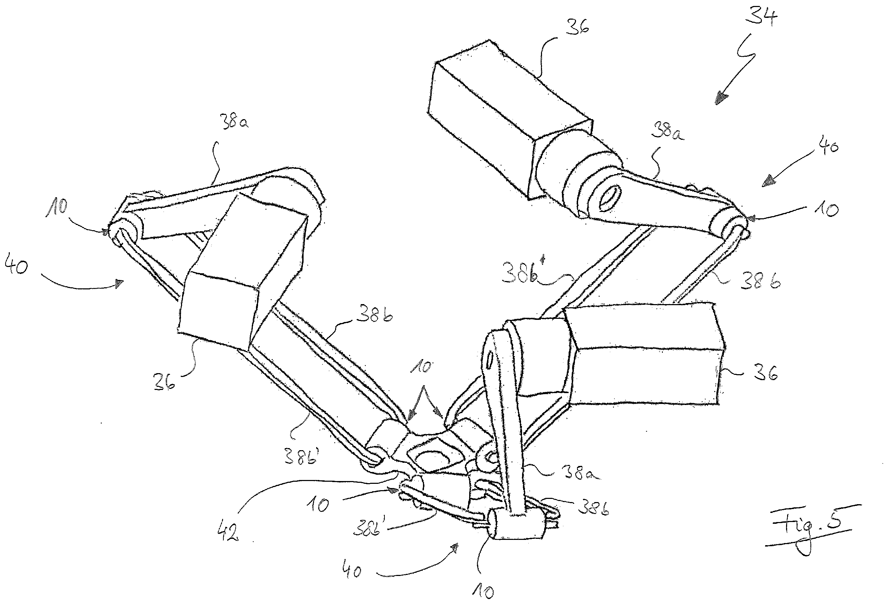

Fig. 5 zeigt einen Tripod-Roboter 34, bei dem sechs der vorstehend beschriebenen Gelenkeinheiten 10 zum Einsatz gelangen. Der Tripod-Roboter 34 weist drei Motoren 36 auf, die an einem nicht gezeigten gemeinsamen Gestell befestigt sind. Die Motoren 36 erzeugen Drehbewegungen, die in ein Verschwenken eines ihnen jeweils zugeordneten Armabschnitts 38a eines jeweiligen Manipulatorarms 40 umgewandelt werden. An den den Motoren 36 abgewandten Enden der Armabschnitte 38a ist eine Aufnahmebohrung vorgesehen, in die jeweils eine Gelenkeinheit 10 eingeschoben und dort fixiert ist. An den Gelenkelementen 15 der Gelenkeinheiten 10 sind jeweils Armabschnitte 38b, 38b' befestigt. Die anderen Enden der Armabschnitte 38b, 38b' stehen in analoger Form über jeweils eine weitere Gelenkeinheit 10 mit einer Basis 42 in Verbindung. An der Basis 42 kann beispielsweise ein Werkzeug, ein Greifer oder ähnliches befestigt sein.

Durch eine selektive Ansteuerung der Motoren 36 kann eine präzise Bewegung der Basis 42 im Raum erzeugt werden. Die kompakten und zuverlässigen Gelenkeinheiten 10 stellen dabei die erforderliche Verschwenkbarkeit der Komponenten 38a, 38b, 38b' bzw. 38b, 38b', 42 relativ zueinander sicher.

### Bezugszeichenliste

- 10: Gelenkeinheit
- 12, 12': Gelenkkörper
- 13, 15: Gelenkelement
- 14: Lagerabschnitt
- 18, 18': Kugel
- 20, 20': Kugelkäfig
- 22: Rille
- 24, 24': Sprengring
- 26, 26': Fixierring
- 28: Bohrung
- 30: Gewindeabschnitt
- 32: Aufnahmerille
- 34: Tripod-Roboter
- 36: Motor
- 38a, 38b, 38b': Armabschnitt
- 40: Manipulatorarm
- 42: Basis

- D1, D2, D2': Drehachse
- B-B: Schnittebene

## Patentansprüche

1. Gelenkeinheit zur gelenkigen Verbindung von zumindest einem ersten und einem zweiten Bauelement, die einen mit dem ersten Bauelement verbindbaren, insbesondere hülsenartigen Gelenkkörper (12) umfasst, in dem ein um eine erste Drehachse (D1) drehbar gelagertes erstes Gelenkelement (13) angeordnet ist, wobei das erste Gelenkelement (13) zumindest einen Lagerabschnitt (14) aufweist, der ein um eine zweite Drehachse (D2) drehbar gelagertes zweites Gelenkelement (15) aufnimmt, das mit dem zweiten Bauelement verbindbar ist.

2. Gelenkeinheit nach Anspruch 1,
**dadurch gekennzeichnet, dass**
die erste und die zweite Drehachse (D1, D2) im Wesentlichen senkrecht zueinander angeordnet sind.

3. Gelenkeinheit nach Anspruch 1 oder 2,
**dadurch gekennzeichnet, dass**
der Lagerabschnitt (14) seitlich aus dem Gelenkkörper (12) ragt.

4. Gelenkeinheit nach zumindest einem der vorstehenden Ansprüche,
**dadurch gekennzeichnet, dass**
das erste Gelenkelement (13) direkt in dem Gelenkkörper (12) gelagert ist, insbesondere mittels Wälzkörper (18).

5. Gelenkeinheit nach zumindest einem der vorstehenden Ansprüche,
**dadurch gekennzeichnet, dass**
das erste Gelenkelement (12) und/oder das zweite Gelenkelement (15) einstückig ausgebildet ist.

6. Gelenkeinheit nach zumindest einem der vorstehenden Ansprüche,
**dadurch gekennzeichnet, dass**
das zweite Gelenkelement (15) in einem, insbesondere hülsenartigen Körper (12') gelagert ist, der in einer Aufnahme, insbesondere Bohrung (28) des Lagerabschnitts (14) angeordnet ist.

7. Gelenkeinheit nach Anspruch 6,
**dadurch gekennzeichnet, dass**
das zweite Gelenkelement (15) direkt in dem Körper (12') gelagert ist, insbesondere mittels Wälzkörper (18).

8. Gelenkeinheit nach zumindest einem der vorstehenden Ansprüche,
**dadurch gekennzeichnet, dass**
das erste Gelenkelement (13) zwei Lagerabschnitte (14) aufweist, die an entgegengesetzten Enden des ersten Gelenkelements (13) angeordnet sind.

9. Gelenkeinheit nach zumindest einem der vorstehenden Ansprüche,
**dadurch gekennzeichnet, dass**
das erste Gelenkelement (13) symmetrisch zu einer Symmetrieebene ausgestaltet ist, die sich senkrecht zu der ersten Drehachse (D1) erstreckt.

10. Gelenkeinheit nach zumindest einem der vorstehenden Ansprüche,
**dadurch gekennzeichnet, dass**
das zweite Gelenkelement (15) einen Abschnitt (30) aufweist, der zur Befestigung des zweiten Bauelements vorgesehen ist, wobei der Abschnitt (30) aus dem Körper (12') ragt und/oder zumindest abschnittsweise mit einem Gewinde, insbesondere mit einem Außengewinde versehen ist.

11. Manipulationseinrichtung, insbesondere Roboter, mit zumindest einem gelenkigen Manipulationsarm (40), der eine Gelenkeinheit gemäß zumindest einem der vorstehenden Ansprüche umfasst

12. Manipulationseinrichtung nach Anspruch 11, wobei die Manipulationseinrichtung, insbesondere ein Tripod-Roboter, drei gelenkige Manipulationsarme (40) aufweist, wobei jeder Manipulationsarm (40) einen ersten Armabschnitt (38a), der mit einem Antriebsmotor (36) verbunden ist, und einen zweiten Armabschnitt (38b, 38b'), der mit einer den drei Manipulationsarmen (40) gemeinsamen Basis (42) verbunden ist, umfasst, wobei der erste und der zweite Armabschnitt (38 abzw. 38b, 38b') jeweils durch eine Gelenkeinheit gemäß zumindest einem der vorstehenden Ansprüche gelenkig miteinander verbunden sind und wobei der zweite Armabschnitt (38b, 38b') jeweils durch eine Gelenkeinheit gemäß zumindest einem der vorstehenden Ansprüche gelenkig mit der Basis (42) verbunden ist.

13. Manipulationseinrichtung nach Anspruch 12, wobei der zweite Armabschnitt zwei im Wesentlichen parallel angeordnete Armelemente (38b, 38b') umfasst.
